Europäisches Patentamt

European Patent Office

Office européen des brevets

(19)

(11) Veröffentlichungsnummer : **0 087 509**
**B1**

(12) # EUROPÄISCHE PATENTSCHRIFT

(45) Veröffentlichungstag der Patentschrift :
24.04.85

(21) Anmeldenummer : 82110923.8

(22) Anmeldetag : 26.11.82

(51) Int. Cl.⁴ : **A 01 N 35/02**, **C 08 G   6/00**,
**C 02 F   1/50**

(54) **Verwendung von Polykondensationsprodukten aus Acrolein und Formaldehyd als Biozide.**

(30) Priorität : 16.02.82 DE 3205487

(43) Veröffentlichungstag der Anmeldung :
07.09.83 Patentblatt 83/36

(45) Bekanntmachung des Hinweises auf die Patenterteilung : 24.04.85 Patentblatt 85/17

(84) Benannte Vertragsstaaten :
**AT BE CH DE FR GB IT LI LU NL SE**

(56) Entgegenhaltungen :
**DE-A-   939 949**
**GB-A- 2 023 123**
**US-A- 2 696 477**

(73) Patentinhaber : **Degussa Aktiengesellschaft**
**Weissfrauenstrasse 9**
**D-6000 Frankfurt am Main 1 (DE)**

(72) Erfinder : **Merk, Wolfgang, Dr. Dipl.-Chem.**
**Grünaustrasse 19**
**D-6450 Hanau 9 (DE)**
Erfinder : **Rink, Karl-Heinz, Dr. Dipl.-Chem.**
**Röntgenstrasse 36**
**D-6450 Hanau 1 (DE)**

EP 0 087 509 B1

## Beschreibung

Gegenstand der Erfindung ist die Verwendung von Polykondensationsprodukten, welche durch Kondensation von Acrolein und Formaldehyd im molaren Verhältnis zwischen 1 : 1 und 1 : 10 in wäßrigem oder wäßrig-organischen Medium in Gegenwart eines basischen Katalysators hergestellt worden sind, als Biozide für wäßrige Systeme.

Es ist bereits bekannt, Acrolein als Biozid für wäßrige Systeme zu verwenden, um beispielsweise in Wasserkreisläufen Algenwachstum zu verhindern und die biologische Keimzahl abzusenken. Die biozide Wirksamkeit des Acroleins ist zwar gut, seine Anwendung hat jedoch auch beträchtliche Nachteile, vor allem wegen seines außerordentlich stechenden Geruchs schon in geringsten Konzentrationen und wegen seines niedrigen Flammpunktes. Auch bereitet es ziemliche Schwierigkeiten, geringe Mengen von Acrolein innerhalb kurzer Zeit homogen in Wasser zu verteilen, obwohl Acrolein zu etwa 18 % in Wasser löslich ist.

Es wurde nun gefunden, daß die mit der Verwendung des Acroleins als Biozid verbundenen Nachteile vermieden werden können, wenn man an seiner Stelle niedermolekulare wasserlösliche Polykondensationsprodukte aus Acrolein und Formaldehyd einsetzt. Die Anwendung dieser Polykondensationsprodukte gestaltet sich sehr einfach, weil sie leicht mit Wasser verdünnbar sind. Außerdem sind sie wesentlich geruchsärmer als Acrolein. Ihre Wirksamkeit als Biozide erreicht etwa die des Acroleins, in bestimmten Fällen wird die Wirksamkeit des Acroleins sogar übertroffen. Ein weiterer Vorteil besteht darin, daß die erfindungsgemäß zu verwendenden Polykondensationsprodukte kein Nachlassen in ihrer bioziden Wirksamkeit zeigen, während in Wasser gelöstes Acrolein im Laufe weniger Wochen eine Alterung oder chemische Veränderung erleidet, die mit einem erheblichen Nachlassen der bioziden Wirksamkeit verbunden ist.

Die erfindungsgemäß zu verwendenden Polykondensationsprodukte werden hergestellt durch Kondensation von Acrolein und Formaldehyd im molaren Verhältnis zwischen 1 : 1 und 1 : 10, vorzugsweise zwischen 1 : 2 und 1 : 4, in wäßrigem oder wäßrig-organischem Medium in Gegenwart eines basischen Katalysators.

Geeignete basische Katalysatoren sind beispielsweise die Hydroxide oder Carbonate von Natrium oder Kalium und Ammoniak. Besonders geeignet sind primäre, sekundäre oder tertiäre Amine. Vorzugsweise wird Piperidin verwendet. Die Katalysatoren werden in einer Menge zwischen 0,1 und 5 Gewischtsprozent, vorzugsweise zwischen 0,5 und 1 Gewichtsprozent, bezogen auf das Gewicht des eingesetzten Acroleins und Formaldehyds, eingesetzt.

Der Formaldehyd kann sowohl in Form einer wäßrigen Formaldehydlösung als auch in Form von Paraformaldehyd, dann unter Zusatz von Wasser, eingesetzt werden.

In manchen Fällen ist es vorteilhaft, die Kondensationsreaktion in zusätzlicher Gegenwart von wasserlöslichen ein- oder mehrwertigen Alkoholen und/oder Säureamiden vorzunehmen. Die Alkohole und Säureamide können in Mengen bis zu einem Mol pro Mol eingesetztem Acrolein zugesetzt werden und werden zumindest teilweise in das entstehende Polykondensationsprodukt eingebaut. Geeignete Alkohole sind beispielsweise Methanol, Ethanol, n-Propanol, Isopropylalkohol, Ethylenglykol, 1,4-Butandiol, Triethylenglykol und andere wasserlösliche Polyglykole. Besonders geeignet ist Allylalkohol. Geeignete Amide sind beispielsweise Acetamid, Harnstoff oder Caprolactam. Besonders geeignet ist Formamid.

Die Kondensationsreaktion verläuft stark exotherm. Relativ kleine Ansätze können zwar in der Weise vorgenommen werden, daß man die Reaktionsteilnehmer vermischt und dann den Katalysator hinzufügt, bei größeren Ansätzen ist es jedoch empfehlenswerter, nur einen Teil der Reaktionsteilnehmer oder Wasser oder einen Alkohol zusammen mit dem Katalysator vorzulegen und den Rest der Reaktionsteilnehmer langsam portionsweise oder kontinuierlich mit solcher Geschwindigkeit zuzufügen, daß die freiwerdende Reaktionswärme problemlos abgeführt werden kann.

Für die erfindungsgemäße Verwendung als Biozide werden die bei der Kondensationsreaktion gebildeten Polykondensationsprodukte in Form der erhaltenen wäßrigen oder wäßrig-organischen Lösung unmittelbar eingesetzt. Die Anwendungskonzentrationen liegen, berechnet als Feststoff, im Bereich zwischen etwa 1 und etwa 500 ppm. Natürlich sind auch größere Konzentrationen als 500 ppm ohne weiteres anwendbar, aber aus wirtschaftlichen Gründen nicht sinnvoll. Üblicherweise werden die Polykondensationsprodukte in einer Konzentration zwischen 5 und 50 ppm angewandt. Nur wenn stark verschmutzte und mit Algen und Mikroorganismen verunreinigte wäßrige Systeme, z. B. Wasserkreisläufe, erstmals behandelt werden sollen, empfiehlt sich eine höhere Dosierung, beispielsweise im Bereich zwischen 100 und 200 ppm. Wenn sich dann der angestrebte Erfolg der Behandlung eingestellt hat, kann die Konzentration wieder entsprechend zurückgenommen werden.

Die erfindungsgemäß zu verwendenden Polykondensationsprodukte verhindern Algenwachstum, vernichten im Wasser lebende Mikroorganismen und tragen zur Absenkung der biologischen Keimzahl bei. Sie können in Wasserkreisläufen, z. B. in Kraftwerken oder Raffinerien, ebenso eingesetzt werden wie in Bewässerungskanälen für landwirtschaftlich genutzte Flächen. In den nachfolgenden Beispielen wird die Herstellung von erfindungsgemäß zu verwendenden Polykondensationsprodukten und die Prüfung von deren biozider Wirksamkeit näher erläutert.

Prozentangaben bedeuten, sofern nicht anders angegeben, Gewichtsprozente.

Beispiel 1

34,5 cm$^3$ Acrolein (Reinheit 96 %, Dichte 0,845) = 1/2 Mol wurden vermischt mit 72,6 cm$^3$ einer wäßrigen Formaldehydlösung (Gehalt 37 %, Dichte 1,116) = 1 Mol und mit 75 cm$^3$ Wasser verdünnt. Unter Rühren wurden bei Raumtemperatur 0,5 cm$^3$ Piperidin zugegeben. Das Reaktionsgemisch erreichte innerhalb einer knappen Minute eine Temperatur von 90 °C. Bei dieser Temperatur wurde noch 30 Minuten lang gerührt und dann auf Raumtemperatur abgekühlt.

Das so erhaltene Polykondensationsprodukt aus Acrolein und Formaldehyd in molaren Verhältnis 1 : 2 wurde in Konzentrationen von 100 ppm, 20 ppm und 5 ppm Algenkulturen (Chlorella kessleri) zugesetzt, die in 1 Liter-Bechergläsern in einer speziellen Algennährlösung gezüchtet worden waren und deren Wachstumszeit bei Optimalbedingungen nach Animpfen mit Testkeimen etwa 1 bis 2 Wochen betragen hatte.

Um die biozide Wirksamkeit mit der von Acrolein vergleichen zu können, wurden die angegebenen Konzentrationen nur auf den Gehalt des Polykondensationsprodukts an Acrolein berechnet.

Nach einer Einwirkungsdauer von 3 bis 4 Tagen bei Raumtemperatur wurde bei allen drei angewandten Konzentrationen eine Schädigung der Algen wahrgenommen. Bei 100 ppm waren die Algen im Wachstum total vernichtet (Wirksamkeit sehr gut), bei 20 ppm war die Wirksamkeit gut und bei 5 ppm war die Wirksamkeit noch zufriedenstellend.

Im Vergleich dazu hatte Acrolein, frisch in Wasser gelöst, bei 100 ppm eine sehr gute Wirksamkeit, ebenso bei 20 ppm, aber bei 5 ppm war die Wirksamkeit ungenügend.

Bei Wiederholung der Versuche mit der Acroleinlösung nach 4 bwz. 8 Wochen blieb die Wirksamkeit bei 100 ppm zwar gleich, bei 20 ppm war sie jedoch bereits auf mangelhaft abgefallen. Die Lösung des Polykondensationsproduktes dagegen zeigte nach 4 bzw. 8 Wochen eine unveränderte Wirksamkeit.

Beispiel 2

In einem mit Rührer versehenen 250 ml-Rundkolben wurden 72,6 cm$^3$ einer wäßrigen Formaldehydlösung (Gehalt 37 %, Dichte 1,116) = 1 Mol und 0,5 cm$^3$ Piperidin vorgelegt und auf 70 °C vorgewärmt. Unter Rühren wurde ein homogenes Gemisch aus 34,5 cm$^3$ Acrolein (Reinheit 96 %, Dichte 0,845) = 1/2 Mol und weiteren 72,6 cm$^3$ der obigen Formaldehydlösung = 1 Mol mit solcher Geschwindigkeit zugetropft, daß eine maximale Temperatur von 80 °C erreicht, aber nicht überschritten wurde. Dafür wurde eine Zeit von 3 Minuten benötigt. Anschließend wurde noch eine Stunde lang bei 80 °C gerührt und dann auf Raumtemperatur abgekühlt.

Das so erhaltene Polykondensationsprodukt aus Acrolein und Formaldehyd im molaren Verhältnis 1 : 4 wurde analog wie im Beispiel 1 wiederum in Konzentrationen von 100 ppm, 20 ppm und 5 ppm zur Einwirkung auf Algenkulturen gebracht, wobei ebenfalls wieder die Konzentrationen nur auf den Acroleingehalt berechnet wurden. Innerhalb von 3 Tagen war bei allen drei Konzentrationen ein völliges Absterben der Algenkulturen zu beobachten.

Die Wirksamkeitsprüfung wurde wiederholt mit dem Unterschied, daß der Konzentrationsberechnung nicht der Acroleingehalt, sondern der Gesamt-Feststoffgehalt zugrundegelegt wurde. In diesem Fall ergab sich eine sehr gute Wirksamkeit bei 100 ppm und 20 ppm und eine immer noch ausreichende Wirksamkeit bei 5 ppm.

Um zu prüfen, ob die erfindungsgemäß zu verwendenden Polykondensationsprodukte auch bei erhöhten Temperaturen ihre Wirksamkeit behalten, wurde das obige Polykondensationsprodukt aus Acrolein und Formaldehyd im molaren Verhältnis 1 : 4 zunächst 3 Stunden lang in einem Autoklaven auf 130 °C erhitzt und dann erneut auf seine biozide Wirksamkeit geprüft. Es zeigte sich, daß bei 100 ppm nach wie vor eine sehr gute Wirksamkeit vorhanden war — die Algenkulturen waren innerhalb von 3 bis 4 Tagen abgestorben —, während bei 20 ppm die Wirksamkeit auf befriedigende bis ausreichende Werte zurückgegangen war.

Beispiel 3

60 g Paraformaldehyd = 2 Mol, 0,5 g Piperidin und 80 g Wasser wurden in einem mit Rührer und Rückflußkühler versehenen 250 ml-Rundkolben vorgelegt und auf 70 °C erwärmt. Unter Rühren wurden innerhalb von 3,5 Minuten 34,5 cm$^3$ Acrolein (Reinheit 96 %, Dichte 0,845) = 1/2 Mol zugetropft. Anschließend wurde noch eine Stunde lang bei 80 °C gerührt und dann auf Raumtemperatur abgekühlt.

Das so erhaltene Polykondensationsprodukt aus Acrolein und Formaldehyd im molaren Verhältnis 1 : 4 zeigte die gleiche Wirksamkeit wie das im Beispiel 2 hergestellte und geprüfte.

Zusätzlich wurde die Wirksamkeit des Polykondensationsprodukts gegen Schimmelpilze und Bakterien geprüft.

Bei der Schimmelpilzart Aspergillus niger wurde ein Wert für die minimale Hemmkonzentration für das Wachstum im Bereich von 125 ppm gefunden. Im Vergleich dazu hat Acrolein einen Wert von 80 ppm.

Bei der Bakterienart Bazillus subtilis wurden 20 ppm benötigt, um das Keimwachstum zu hemmen. Diese Menge wird auch bei Acrolein benötigt, um einen vergleichbaren Effekt zu erzielen.

Bei der Bakterienart Staphylococcus albus wurden 40 ppm benötigt, um das Keimwachstum zu hemmen. In diesem Fall braucht man bei Acrolein die doppelte Konzentration, nämlich 80 ppm, um die entsprechende Wirkung zu erreichen.

Beispiel 4

In einem mit Rührer versehenen 250 ml-Rundkolben wurden 36,3 cm³ einer wäßrigen Formaldehydlösung (Gehalt 37 %, Dichte 1,116) = 1/2 Mol, 50 cm³ Wasser und 0,5 cm³ Piperidin vorgelegt und auf 70 °C vorgewärmt. Unter Rühren wurde ein homogenes Gemisch aus 34,5 cm³ Acrolein (Reinheit 96 %, Dichte 0,845) = 1/2 Mol und weiteren 72,6 cm³ der obigen Formaldehydlösung = 1 Mol mit solcher Geschwindigkeit zugetropft, daß die Temperatur von 80 °C nicht überschritten wurde. Dafür wurde eine Zeit von 2 Minuten benötigt. Anschließend wurde noch eine Stunde lang bei 80 °C gerührt und dann auf Raumtemperatur abgekühlt.

Das so erhaltene Polykondensationsprodukt aus Acrolein und Formaldehyd im molaren Verhältnis 1 : 3 wurde in Konzentration von 100 ppm und 20 ppm an Algenkulturen geprüft. Bei 100 ppm trat innerhalb von 3 Tagen völlige Vernichtung der Algen ein, während bei 20 ppm innerhalb dieser Zeit eine starke Schädigung der Algen zu beobachten war.

Beispiel 5

In einem mit Rührer versehenen 250 ml-Rundkolben wurden 34,5 cm³ Acrolein (Reinheit 96 %, Dichte 0,845) = 1/2 Mol, 72,6 cm³ einer wäßrigen Formaldehydlösung (Gehalt 37 %, Dichte 1,116) = 1 Mol und 34 cm³ Allylalkohol (Dichte 0,854) = 1/2 Mol vermischt und bei Raumtemperatur mit 0,5 cm³ Piperidin versetzt. Innerhalb von 4 Minuten stieg die Temperatur des Reaktionsgemisches auf 78 °C. Anschließend wurde noch eine Stunde lang bei 80 °C gerührt und dann auf Raumtemperatur abgekühlt.

Das so erhaltene, in Gegenwart von Allylalkohol hergestellte Polykondensationsprodukt aus Acrolein und Formaldehyd im molaren Verhältnis 1 : 2 wurde in Konzentrationen von 100 ppm, 20 ppm und 5 ppm an Algenkulturen geprüft. Innerhalb von 3 bis 4 Tagen trat bei 100 ppm und 20 ppm vollständige Vernichtung der Algen ein und bei 5 ppm wurde eine zufriedenstellende Schädigung erreicht.

Beispiel 6

In einem mit Rührer und Rückflußkühler versehenen 250 ml-Rundkolben wurden 34,5 cm³ Formamid (Dichte 1,133) = 1/2 Mol und 0,5 cm³ Piperidin vorgelegt und auf 80 °C erwärmt. Unter Rühren wurde ein homogenes Gemisch aus 34,5 cm³ Acrolein (Reinheit 96 %, Dichte 0,845) = 1/2 Mol und 72,6 cm³ einer wäßrigen Formaldehydlösung (Gehalt 37 %, Dichte 1,116) = 1 Mol innerhalb einer Minute unter Einhaltung der Höchsttemperatur von 80 °C zugetropft. Anschließend wurde noch eine Stunde lang bei 80 °C gerührt und dann auf Raumtemperatur abgekühlt.

Das so erhaltene, in Gegenwart von Formamid hergestellte Polykondensationsprodukte aus Acrolein und Formaldehyd im molaren Verhältnis 1 : 2 wurde in Konzentrationen von 100 ppm, 20 ppm und 5 ppm an Algenkulturen geprüft. Innerhalb von 3 bis 4 Tagen trat bei 100 ppm und 20 ppm vollständige Vernichtung der Algen ein und bei 5 ppm wurde eine zufriedenstellende Schädigung erreicht.

Beispiel 7

In einem mit Rührer und Rückflußkühler versehenen 250 ml-Rundkolben wurden 31 g Ethylenglykol = 1/2 Mol und 0,5 cm³ Piperidin vorgelegt und auf 80 °C erwärmt. Unter Rühren wurde ein homogenes Gemisch aus 34,5 cm³ Acrolein (Reinheit 96 %, Dichte 0,845) = 1/2 Mol und 72,6 cm³ einer wäßrigen Formaldehydlösung (Gehalt 37 %, Dichte 1,116) = 1 Mol innerhalb einer Minute zugetropft, wobei die Temperatur von 80 °C nicht überschritten wurde. Anschließend wurde noch eine Stunde lang bei 80 °C gerührt und dann auf Raumtemperatur abgekühlt.

Das so erhaltene, in Gegenwart von Ethylenglykol hergestellte Polykondensationsprodukt aus Acrolein und Formaldehyd im molaren Verhältnis 1 : 2 wurde in Konzentrationen von 100 ppm, 20 ppm und 5 ppm an Algenkulturen geprüft. Innerhalb von 3 bis 4 Tagen trat bei 100 ppm und 20 ppm vollständige Zerstörung ein und bei 5 ppm wurde eine zufriedenstellende Schädigung der Algen erreicht.

**Patentanspruch**

Verwendung von Polykondensationsprodukten, welche durch Kondensation von Acrolein und Formaldehyd im molaren Verhältnis zwischen 1 : 1 und 1 : 10 in wässrigem oder wäßrig-organischem Medium in Gegenwart eines basischen Katalysators hergestellt worden sind, alls Biozide für wäßrige Systeme.

**Claim**

Use of polycondensation products, produced by the condensation of acrolein and formaldehyde in a molar ratio of from 1 : 1 to 1 : 10 in aqueous or aqueous-organic medium in the presence of a basic catalyst, as biocides for aqueous systems.

**Revendication**

Utilisation de produits de polycondensation, préparés par condensation de l'acroléine et du formol dans un rapport molaire compris entre 1 : 1 et 1 : 10 , en milieu aqueux ou organique aqueux, en présence d'un catalyseur basique, comme agents biocides pour des systèmes aqueux.